# EUROPEAN PATENT APPLICATION

(11) **EP 4 303 714 A1**
(43) Date of publication of application: **10.01.2024**
(21) Application number: 22183304.9
(22) Date of filing: 06.07.2022
(51) Int. Cl.: G06F 3/147, G06F 21/84, G09G 3/20, H04M 1/67, H04W 12/02

(54) **REDUCING REFLECTIONS IN HEAD MOUNTED ITEMS**

(71) Applicant: Nokia Technologies Oy, 02610 Espoo (FI)
(72) Inventor: Salmimaa, Marja, 33100 Tampere (FI); Järvenpää, Toni, 33100 Tampere (FI); Lehtiniemi, Arto, 33100 Tampere (FI)
(74) Representative: Swindell & Pearson Limited

(57) **Abstract**

Examples of the disclosure are configured to reduce the effects of reflections from the surfaces of head mounted items such as mediated reality headsets or sunglasses. Examples of the disclosure are configured to detect that a user is using a device with a display and that the user is wearing a head mounted item comprising one or more reflective surfaces. The examples of the disclosure then cause a light pattern to be projected onto the one or more reflective surfaces wherein the pattern is projected to mask a reflection of the display of the device on the one or more reflective surfaces.

## Description

### TECHNOLOGICAL FIELD

Examples of the present disclosure relate to reducing reflections in head mounted items. Some relate to reducing reflections in head mounted items when the user is also viewing a device with a display.

### BACKGROUND

If a user is wearing a head mounted item such as glasses or a mediated reality headset reflections can occur on reflective surfaces of the head mounted items. This could be problematic if a user is using a device with a display screen at the same time as they are wearing the head mounted item. The reflections from the head mounted item could comprise content that is displayed on the display of the device. This could create privacy issues.

### BRIEF SUMMARY

According to various, but not necessarily all, examples of the disclosure there is provided an apparatus comprising means for:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

The means may be for determining a position of the one or more reflective surfaces relative to the display and controlling the projection of the light pattern so that it is incident on at least part of the one or more reflective surfaces.

The head mounted item may comprises at least one of; glasses, sunglasses, visor, helmet, augmented reality headset.

The means may be for capturing one or more images of the user and the head mounted item comprising one or more reflective surfaces and using image processing to remove the light pattern and the reflection of the display of the device from the captured one or more images.

The means may be for capturing one or more images of the user and the head mounted item comprising one or more reflective surfaces and using one or more filters to reduce the light pattern from the image.

The means may be for alternating the projected light pattern between an off state and an on state and capturing one or more images of the user and the head mounted item comprising one or more reflective surfaces and controlling image processing of the captured images based on whether an image was captured when the projected light pattern was in an off state or an on state.

If the image was captured when the projected light pattern was in an off state the image processing may be controlled to remove the reflection and if the image was captured when the projected light pattern was in an on state the image processing may be controlled to remove the reflection and the light pattern.

The means may be for alternating the projected light pattern between an off state and an on state and capturing one or more images of the user and the head mounted item comprising one or more reflective surfaces and synchronising the capturing of the images so that the image is captured when the projected light pattern is in an on state.

One or more parameters of the light pattern may be selected to reduce the visibility of the light pattern for the user wearing the head mounted item.

The means may be for obtaining information relating to one or more optical properties of the one or more reflective surfaces and using the obtained information to control the one or more parameters of the light pattern.

The one or more parameters may comprise any one or more of: polarization of the light, wavelength of the light.

The means may be for using machine learning to detecting that the user is wearing the head mounted item comprising one or more reflective surfaces.

According to various, but not necessarily all, examples of the disclosure there may be provided a device comprising an apparatus as described herein.

According to various, but not necessarily all, examples of the disclosure there may be provided a head mounted item comprising an apparatus as described herein.

According to various, but not necessarily all, examples of the disclosure there may be provided a method comprising:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

According to various, but not necessarily all, examples of the disclosure there may be provided a computer program comprising computer program instructions that, when executed by processing circuitry, cause:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

### BRIEF DESCRIPTION

Some examples will now be described with reference to the accompanying drawings in which:
FIG. 1 shows an example system;
FIG. 2 shows an example method;
FIG. 3 shows an example system in use;
FIG. 4 shows an example system in use;
FIG. 5 shows an example apparatus.

### DETAILED DESCRIPTION

Examples of the disclosure are configured to reduce the effects of reflections from the surfaces of head mounted items such as mediated reality headsets or sunglasses. Examples of the disclosure reduce the effects of content displayed on devices being used by a wearer of a head mounted item being reflected from reflective surfaces of the head mounted item. This can provide for improved privacy because it prevents third parties being able to see the content in the reflections. It can also be used to improve images of the user wearing the head mounted item by removing the reflections from the images.

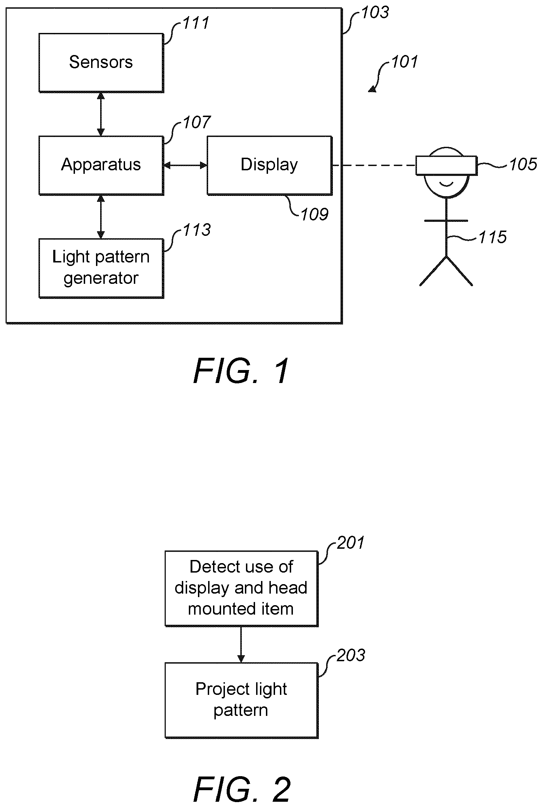

Fig. 1 shows an example system 101 that could be used to implement examples of the disclosure. The system 101 comprises a device 103 and a head mounted item 105. The system 101 could comprise additional or alternative components in other examples.

The device 103 could be a telecommunications device 103 such as a mobile phone, a camera, a computing device, a teleconferencing device or any other suitable type of device 103. The device 103 comprises an apparatus 107, a display 109, one or more sensors 111 and a light pattern generator 113. Only components that are referred to in the following description are shown in Fig.1. Additional components could be provided in some examples of the disclosure. For instance, the device 103 could comprise one or more transceivers that enables the device 103 to communicate within a communications network.

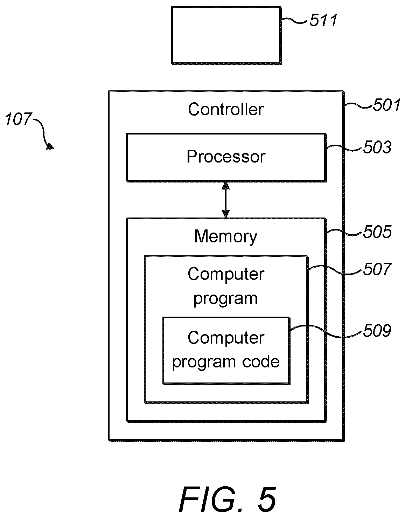

The apparatus 107 can comprise a controller comprising a processor and memory. Examples of an apparatus 107 are shown in Fig. 5. The apparatus 107 can be configured to enable control of the device 103. For example, the apparatus 107 can be configured to control images that are displayed on the display 109 and/or process information obtained by the one or more sensors 111.

The display 109 can comprise any means that can be configured to enable visual content to be displayed. In some examples the display 109 could be any suitable type of display 109. For example, the display 109 could be a liquid crystal display (LCD), a light emitting diode (LED) display, a touch screen, or any other suitable type of display.

The display 109 can be controlled by the apparatus 107 to display visual content. The visual content can comprise images, video images, text, or any other suitable content.

The one or more sensors 111 comprise means for determining a position of the device 103. In some examples the one or more sensors 111 can be configured to enable a position of the device 103 relative to a head mounted item 105 to be determined. The information obtained by the one or more sensors 111 can be used to determine a relative direction between the display 109 of the device 103 and the head mounted item 105. In some examples the information obtained by the one or more sensors 111 can be used to determine a distance between the display 109 of the device 103 and the head mounted item 105.

The one or more sensors 111 can comprise any suitable types of sensors. For instance, the one or more sensors 111 can comprise image sensors, lidar sensors, or any other types of positioning sensors.

The light pattern generator 113 can comprise any means that can be configured to generate a light pattern. The light pattern generator 113 can be configured to enable the generated light pattern to be projected from the device 103. The light pattern generator 113 can be configured to enable the generated light pattern to be projected onto a predetermined surface. The predetermined surface could be a reflective surface of the head mounted item 105 and/or any other suitable surface.

The light patterns generated by the light pattern generator 113 can comprise structured light. The structured light can comprise dark regions and light regions. The respective light and dark regions can be arranged in any suitable configuration. In some examples the light and dark regions can be arranged in a regular or repeating pattern. In some examples the light and dark regions can be arranged in a random arrangement.

The light pattern generator 113 can comprise any suitable means or combinations of means. For instance, the light pattern generator 113 can comprise scanning LEDs, projectors, flash or flash array.

The head mounted item 105 can comprise an item that a user 115 wears on their head and has one or more reflective surfaces. In some examples the head mounted item 105 could cover, or partially cover, the user's eyes when the head mounted item 105 is worn. The head mounted item 105 could be worn on the user's head so that the user's head bears the weight, or at least partially bears the weight, of the head mounted item 105. The head mounted item 105 can be worn on the head of the user 115 so that if the user 115 moves their head the head mounted item 105 is also moved.

In some examples the head mounted item 105 could comprise an electronic device. The electronic device could be a mediated reality device. The mediated reality device could be an augmented reality headset and/or a virtual reality headset.

In some examples the head mounted item 105 could be a passive item. The passive item might not be an electronic device and might not be configured to perform active functions. For example, the passive item could be a pair of sunglasses, a pair of glasses, a visor, a helmet or any other suitable type of head mounted item.

The head mounted item 105 can comprise one or more reflective surfaces. The reflective surfaces could be the lenses in glasses or sunglasses or a mediated reality headset or another suitable type of surface.

A user 115 could wear the head mounted item 105while they are also using the device 103. For example, a user 115 could be wearing the head mounted item 105 and looking at content on the display 109 of the device 103. This could cause the content displayed on the display 109 of the device 103 to be reflected on the reflective surfaces of the head mounted item 105. This is indicated by the dashed line in Fig. 1. This reflection could cause privacy issues because it could allow third parties to see the content from the display 109 by looking at the reflections on the head mounted item 103. The reflections could also decrease the quality of images of the user 115. Examples of the disclosure reduce the effects of these reflections by using projected light patterns to mask the unwanted reflections.

Fig. 2 shows an example method according to examples of the disclosure. The method could be implemented using the apparatus 107 as shown in Fig. 1 and/or by using any other suitable components or combinations of components.

At block 201 the method comprises detecting that a user 115 is using a device 103 with a display 109 and also that the user 115 is wearing a head mounted item 105 comprising one or more reflective surfaces.

The device 103 could be a device 103 as shown in Fig. 1. The device 103 could be a telecommunications device 103 or any other suitable device 103 with a display 109. The head mounted item 105 could be as shown in Fig. 1. The head mounted item 105 could be a mediated reality headset, a pair of glasses or sunglasses or any other suitable item.

An apparatus 107 or any other suitable means can be used to detect that the user 115 is using both a device 103 and a head mounted item 105. Any suitable means can be used to determine that a device 103 is in use. For example, the apparatus 107 could detect that the display 109 of the device 105 is active and/or that the device 103 is performing one or more relevant functions. The apparatus 107 could be configured to control the display of content on the display 109.

The apparatus 107 can also be configured to detect that a user 115 of the device 103 is wearing a head mounted item 105. Any suitable means and methods can be used to determine that the user 115 of the device 103 is also wearing a head mounted item 105. For instance, if the head mounted item 105 is an electronic device such as a mediated reality headset, the sensors 111 of the device 103 could be used to detect the presence of the head mounted item 105. If the head mounted item 105 is an electronic device, then the head mounted item 105 and the device 103 could send messages to each other to indicate whether or not they are currently in use.

In some examples the head mounted item 105 could be a passive device. For instance, the head mounted item 105 could be glasses or sunglasses and might not comprise any electronic components or functionality. In such examples images of the user 115 could be captured and image recognition could be used to identify whether or not the user 115 is wearing a head mounted item 105. In some examples a machine learning program could be used to process captured images of the user 115 so as to determine whether or not the user 115 is wearing a head mounted item 105.

The use of the device 103 could be any use of the device 103 that causes content to be displayed on the display 109 of the device 103. In some examples the user 115 could be actively using the device 103. The active use of the device 103 could comprise the user 115 inputting control commands to the device 103. For instance, the user 115 could be selecting user interface items on the display 109. In some examples the user 115 could be passively using the device 103. In such cases the device 103 could be positioned so that the user 115 can view the content on the display 109 but the user 115 does not need to be interacting with the device 103. That is, the user 115 does not need to be making inputs to the device 103.

The head mounted item 105 can comprise one or more reflective surfaces. The reflective surfaces could be the lenses in glasses or sunglasses or any other suitable part of the head mounted item 105. The reflective surfaces of the head mounted item 105 can be positioned within the head mounted item 105 so that when the user 115 is using both the head mounted item 105 and the device 103 light from the display 109 of the device 103 is incident on the reflective surface of the head mounted item 105. This can cause reflection of the content displayed on the display 109 to be visible on the reflective surfaces of the head mounted item 105.

At block 203 the method comprises causing a light pattern to be projected onto the one or more reflective surfaces of the head mounted item 105. The light pattern is projected to mask a reflection of the display 109 of the device 103 on the one or more reflective surfaces of the head mounted item 105.

The light pattern can be configured to obscure the reflections of the display 109 on the reflective surfaces of the head mounted item 105. The light patterns generated by the light pattern generator 113 can comprise structured light. The structured light can comprise dark regions and light regions. The respective light and dark regions can be arranged in any suitable configuration. In some examples the light and dark regions can be arranged in a regular or repeating pattern. In some examples the light and dark regions can be arranged in a random arrangement. The light pattern can comprise light in the visible range so that the structured light pattern is visible to a person looking at the reflective surfaces of the head mounted item 105.

The light pattern can be generated using any suitable means. In some examples the light pattern generator 113 of the device 103 can comprise scanning LEDs, projectors, flash or flash arrays configured for structured light projection, or any other suitable means.

One or more parameters of the light pattern can be controlled so that the light pattern is reflected by the reflective surface of the head mounted item 105. For example the polarization states and/or bandwidth ranges of the light pattern can be selected so that the reflective surface of the head mounted item 105 at least partially diffuses and/or reflects the light pattern so that the light pattern is visible on the reflective surface.

In some examples a single light pattern can be projected onto a single reflective surface of the head mounted item 105 so as to obscure a single reflection. In other examples a single light pattern could be projected to cover a plurality of reflections. For instance, the single light pattern cold be projected so as to cover a plurality of different reflective surfaces of the head mounted item 105. In some examples a plurality of light patterns could be projected to cover a plurality of reflections. For instance, a first light pattern could be projected onto a first reflective surface and a second light pattern could be projected onto a second, different reflective surface.

In some examples the apparatus 107 can be configured to determine a position of the one or more reflective surfaces of the head mounted item 105 relative to the display 109. Any suitable means can be used to determine a position of the one or more reflective surfaces of the head mounted item 105 relative to the display 109. In some examples the sensors 111 can be used to determine the relative positions. Once the position of the one or more reflective surfaces of the head mounted item 105 relative to the display 109 has been determined the projection of the light pattern can be controlled so that the projected light pattern is incident on at least part of the one or more reflective surfaces. The projection of the light pattern can be controlled so that the projected light pattern at least partially covers the reflection of the display on the reflective surfaces. The controlling of the projection of the light pattern can comprise controlling a direction or location from which the light pattern is projected.

In some examples the device 103 can comprise a camera. In such examples the apparatus 107 can control the camera to capture images of the user 115 and the head mounted item 105. If the user 115 is using the device 103 at the time the image is captured then the projected light pattern could be visible on the reflected surfaces of the head mounted item 105. This projected light pattern could reduce the image quality as it might create a strange visual effect. To avoid this the apparatus 107 can be configured to perform image processing on the captured images. The image processing can be configured to remove the light pattern and any reflection of the display of the device 103 from the captured images.

In some examples one or more filters can be used to reduce the light pattern in captured images of the user. In some examples the filters can prevent the light patterns from being captured by the image sensor. The filters can be any type of filters that can be configured to remove, or at least partially remove, the light pattern from the images. The filters could be hardware filters, software filters, and/or any other type of combinations of filters. In some examples the hardware filters could comprise optical means. The optical means could comprise one or more polarizers or any other suitable type of filters.

In examples where a filter is used this could reduce the brightness of the captured image. In such examples the reduction in brightness caused by the filters can be compensated for by image processing or any other suitable means.

In some examples the device 103 can be configured so that the projected light pattern can be alternated between an off state and an on state. The alternating between the on state and the off state can be fast enough so that a human viewer does not detect the off time. The image processing that is performed on the captured images can be controlled based on whether or not the image was captured when the projected light pattern was in an off state or an on state. If the image was captured when the projected light pattern was in an off state then only the reflections on the head mounted item 105 need to be removed. Therefore, if the image was captured when the projected light pattern was in an off state the image processing is controlled to remove the reflection. If the image was captured when the projected light pattern was in an on state then both the reflections on the head mounted item 105 and the projected light patterns need to be removed. Therefore, if the image was captured when the projected light pattern was in an on state the image processing is controlled to remove the reflection and the light pattern.

To determine if an image was captured when the projected light pattern was in an off state or an on state time stamped information can be shared between the light pattern generator 113 and any image processing means.

In some examples the capturing of the images can be synchronised with the projection of the light patterns. For instance, the timing of the capturing of the image of the user 115 could be controlled so that the image is captured when the projected light pattern is in an on state. The image processing or other means for reducing the light pattern in the images can therefore be configured to remove the light pattern and the one or more reflection.

In some examples the capturing of the images can be synchronised with the projection of the light patterns. For instance, the timing of the capturing of the image of the user 115 could be controlled so that the image is captured when the projected light pattern is in an off state. The image processing or other means for reducing the light pattern in the images can therefore be configured to remove the one or more reflections.

In some examples one or more parameters of the light pattern are selected to reduce the visibility of the light pattern for the user wearing the head mounted item 105. For instance, the polarisation of light within the light pattern can be controlled to reduce the transmission of the light pattern through the head mounted item 105. For example, information about whether or not the head mounted item 105 filters S-polarized light or P-polarized light can be obtained by the device 103. Once the relevant information has been obtained the light pattern generator 113 can then be controlled to use the appropriate polarisation so as to reduce the transmission of the light pattern through the reflective surface. Other parameters, such as the wavelength of the light, could also be controlled as appropriate.

The information that is used to control the parameters of the light pattern can be any relevant information relating to the optical properties of the reflective surfaces of the head mounted item 105. For example, it could be the polarization, the type of coatings used, the refractive index or any other suitable parameter. The information can be obtained from any suitable resource. In some examples the information can be obtained from messages from the head mounted item 105 or by scanning or otherwise interrogating the head mounted item 105. In some examples the device 103 could be configured to identify the type of head mounted item 105 and then use information about the type of head mounted item 105 to access information about the relevant optical properties. This could enable the device 103 to retrieve the information about the relevant optical properties from a resource other than the head mounted item 105 itself.

In some examples machine learning can be used to implement the method of Fig. 2. For instance, in some examples machine learning can be used to detect the user is wearing the head mounted item 105 comprising one or more reflective surfaces. The machine learning could be used to process inputs from an image sensor or any other suitable source to detect that the user 115 is wearing the head mounted item 105.

The machine learning can comprise a machine learning model. The machine learning model that is used can comprise a neural network or any other suitable type of trainable model. The term "Machine Learning" refers to any kind of artificial intelligence (Al), or other method that is trainable or tuneable using data. The machine learning model can comprise a computer program. The machine learning model can be trained to perform a task, such as detecting whether or not a user 115 is wearing a head mounted item 105 or determining a type of head mounted 105, or determining optical parameters of a head mounted item 105, or any other suitable task, without being explicitly programmed to perform that task. The machine learning model can be configured to learn from experience E with respect to some class of tasks T and performance measure P if its performance at tasks in T, as measured by P, improves with experience E. In these examples the machine learning model can learn from previous captured images of the user 115, images of head mounted items 105 or any other suitable data. The machine learning model can also be a trainable computer program. Other types of machine learning models could be used in other examples.

Any suitable process can be used to train the machine learning model. The training of the machine learning model can be performed using real world/or simulation data. The training data used to train the machine learning model can comprise historical data collected from images of the user 115 or any other suitable source. The training of the machine learning model can be repeated as appropriate until the machine learning model has attained a sufficient level of stability. The machine learning model has a sufficient level of stability when fluctuations in the predictions provided by the machine learning model are low enough to enable the machine learning model to be used to perform the relevant tasks. The machine learning model has a sufficient level of stability when fluctuations in the outputs provided by the machine learning model are low enough so that the machine learning model provides consistent responses to test inputs.

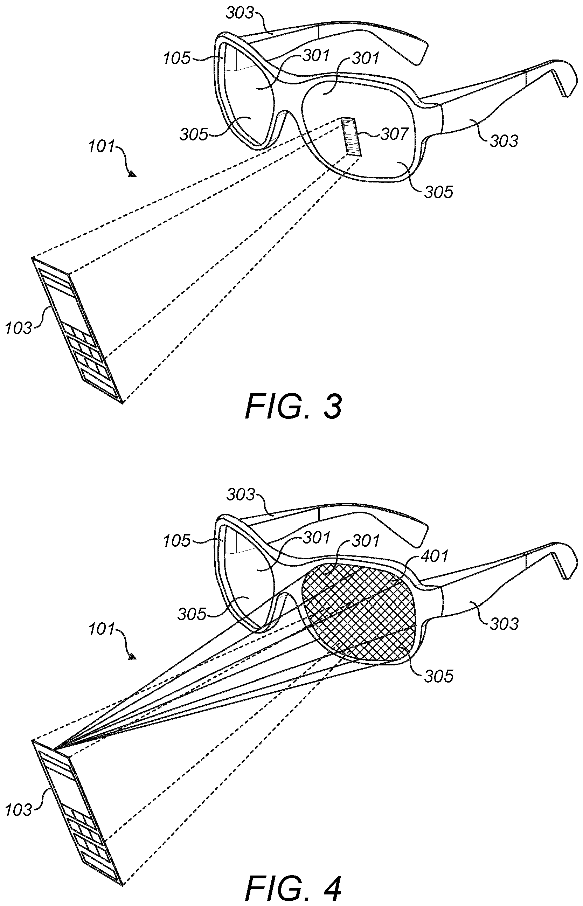

Fig. 3 shows an example system 101 in use. In this example the system 101 comprises a device 103 and a head mounted item 105. The device 103 in this example is a mobile telephone and the head mounted item 105 in this example is a pair of glasses. Other types of devices 103 and head mounted items 105 could be used in other examples of the disclosure.

In this example the head mounted item 105 comprises lenses 301 and arms 303. The head mounted item 105 could comprise other components in other examples.

In this case the head mounted item 105 comprises two lenses 301, a right lens and left lens. The head mounted item 105 is configured so that when the head mounted item 105 is worn by a user the right lens 301 is positioned over the user's right eye and the left lens 301 is positioned over the user's left eye.

The lenses 301 provide a reflective surface 305. In this example the respective lenses 301 provide different reflective surfaces 305. That is, the right lens 301 provides a first reflective surface 305 and the left lens 301 provides a second reflective surface 305. In this example the right lens and the left lens 301 are the same so that the different reflective surfaces 305 are also the same. In other examples a different number of reflective surfaces could be provided within the head mounted item 105. For instance, a single eyepiece or lens could cover both of the user's eyes and so the head mounted item 105 might comprise a single reflective surface. In some examples the reflective surfaces 305 that cover the different eyes could be different and/or have different properties.

The arms 303 extend along the side of the head mounted item 105 so that when a user 115 is wearing the head mounted item 105 the arms 303 extend along the side of the user's head and are supported by the user's ears. The arms 303 can therefore enable the head mounted item 105 to be worn by the user 115. Other means for enabling a user to wear the head mounted item 105 can be used in other examples.

In the example of Fig. 1 the device 103 is a mobile phone. The device 103 comprises a display 109. The display 109 is not shown in Fig. 3 because the display 109 would be on the side of the device 103 that is facing towards the user 115 and the head mounted item 105. The user 115 could be holding the device 103 so that the display 109 is facing towards them or could arrange the device 103 in any other suitable position so that they can view content displayed on the display 109.

Light from the display 109 is incident on the lenses 301 of the head mounted item 105. This causes a reflection 307 to be visible in the reflective surface 305 of the lens 301. The reflection could enable third parties to see the content from the display 109 of the device 103. The reflection could also be an unwanted effect in captured images of the user 115.

In the example of Fig. 3 a reflection 307 is shown in the reflective surface 305 of the left lens. In other examples the reflection 307 could be in the reflective surface 305 of the right lens. In other examples there could be more than one reflection 307. The different reflections could be in different parts of the same reflective surface or could be in different reflective surfaces 305 depending on the design of the head mounted item 105 and the position of the display 109 relative to the head mounted item 105.

Fig. 4 shows the system 101 of Fig. 3, however in this example a light pattern 401 is projected onto a reflective surface 305 of the head mounted item 105 so as to mask the reflection 307 of the display 109 in the head mounted item 105.

The light pattern 401 is projected from the device 103. In the example of Fig. 4 the light pattern 401 is projected from the same side of the device 103 as the display 109. In the example of Fig. 4 the light pattern 401 is projected from a location at the top of the device 103. The light pattern 401 could be projected from other locations in other examples.

The light pattern 401 is projected on to the head mounted item 105 so as to mask the reflection 307. The reflection 307 is not shown in Fig. 4 because it is covered by the light pattern 401.

The device 103 is configured to project the light pattern 401 onto the reflective surface 305 of the head mounted item 105 that comprise one or more reflections 307 of the display 109. In some examples the device 103 can be configured to identify which of the reflective surfaces 305 of the head mounted item 105 comprise a reflection 307. In some examples machine learning could be used to identify which of the reflective surfaces 305 of the head mounted item 105 comprise a reflection 307. In the example of Fig. 4 the device 103 can determine that there is a reflection 307 on the left lens 301 of the head mounted item 105 but not the right lens 301. In the example of Fig. 4 the light pattern 401 is projected onto the left lens 301 and no light pattern is projected on to the right lens 301.

The light pattern 401 can be sized and shaped so that it covers the reflection 307. In the example of Fig. 4 the light pattern 401 completely covers the reflection 307 so that no section of the reflection 307 is visible. In this example the light pattern 401 has a similar shape to the reflective surface 305. For instance, in this example the light pattern 401 has a similar shape to the left lens 301. The projection of the light pattern 401 can be controlled so that the light pattern 401 is approximately the same size as the reflective surface 305. In the example of Fig. 4 the edges of the light pattern 401 are substantially aligned with the edges of the reflective surface 105. This means that any reflections to any direction in the reflective surface 305 are masked by the light pattern 401. Other configurations of the light pattern 401 could be used in other examples.

In Fig. 4 the light pattern 401 comprises a random array of light and dark sections. Other patterns, or types of patterns, could be used in other examples.

As shown in Fig. 4 the light pattern 401 covers the reflection 307 so that the reflection 307, and therefore any content from the display 109, is not visible to a third party. However, the light pattern might look strange in an image of the user 115. Therefore, image processing or any other suitable means could be used to remove the light pattern 401 from images of the user 115. The images could be images that are captured by the device 103 or images that are captured by a different device.

Fig. 5 schematically illustrates an apparatus 107 that can be used to implement examples of the disclosure. In this example the apparatus 107 comprises a controller 501. The controller 501 can be a chip or a chip-set. In some examples the controller can be provided within a communications device or any other suitable type of device.

In the example of Fig. 5 the implementation of the controller 501 can be as controller circuitry. In some examples the controller 501 can be implemented in hardware alone, have certain aspects in software including firmware alone or can be a combination of hardware and software (including firmware).

As illustrated in Fig. 5 the controller 501 can be implemented using instructions that enable hardware functionality, for example, by using executable instructions of a computer program 507 in a general-purpose or special-purpose processor 503 that can be stored on a computer readable storage medium (disk, memory etc.) to be executed by such a processor 503.

The processor 503 is configured to read from and write to the memory 505. The processor 503 can also comprise an output interface via which data and/or commands are output by the processor 503 and an input interface via which data and/or commands are input to the processor 503.

The memory 505 is configured to store a computer program 507 comprising computer program instructions (computer program code 509) that controls the operation of the controller 501 when loaded into the processor 503. The computer program instructions, of the computer program 507, provide the logic and routines that enables the controller 501 to perform the methods illustrated in Fig. 2 The processor 503 by reading the memory 505 is able to load and execute the computer program 507. The apparatus 107 therefore comprises: at least one processor 503; and at least one memory 505 including computer program code 509, the at least one memory 505 storing instructions 509 that, when executed by the at least one processor 503, cause the apparatus 107 at least to perform:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

As illustrated in Fig. 5 the computer program 507 can arrive at the controller 501 via any suitable delivery mechanism 511. The delivery mechanism 511 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 507. The delivery mechanism can be a signal configured to reliably transfer the computer program 507. The controller 501 can propagate or transmit the computer program 507 as a computer data signal. In some examples the computer program 507 can be transmitted to the controller 501 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 507 comprises computer program instructions for causing an apparatus 107 to perform at least the following:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

The computer program instructions can be comprised in a computer program 507, a non-transitory computer readable medium, a computer program product, a machine readable medium. In some but not necessarily all examples, the computer program instructions can be distributed over more than one computer program 507.

Although the memory 505 is illustrated as a single component/circuitry it can be implemented as one or more separate components/circuitry some or all of which can be integrated/removable and/or can provide permanent/semi-permanent/ dynamic/cached storage.

Although the processor 503 is illustrated as a single component/circuitry it can be implemented as one or more separate components/circuitry some or all of which can be integrated/removable. The processor 503 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software can not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 107 as shown in Fig. 5 can be provided within any suitable device. In some examples the apparatus 107 can be provided within an electronic device such as a mobile telephone, a teleconferencing device, a camera, a computing device or any other suitable device. In some examples the apparatus 107 could be provided within a head mounted item 105 such as a mediated reality headset. In some examples the apparatus 107 could be provided in any suitable component of a system 101 comprising a device 103 and a head mounted item 105. In some examples the apparatus 107 is the device 103, the head mounted item 105, or is an electronic device such as a mobile telephone, a teleconferencing device, a camera, a computing device or any other suitable device.

The blocks illustrated in Fig. 2 can represent steps in a method and/or sections of code in the computer program 507. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

2. An apparatus as claimed in claim 1 wherein the means are for determining a position of the one or more reflective surfaces relative to the display and controlling the projection of the light pattern so that it is incident on at least part of the one or more reflective surfaces.

3. An apparatus as claimed in any preceding claim wherein the head mounted item comprises at least one of; glasses, sunglasses, visor, helmet, augmented reality headset.

4. An apparatus as claimed in any preceding claim wherein the means are for capturing one or more images of the user and the head mounted item comprising one or more reflective surfaces and using image processing to remove the light pattern and the reflection of the display of the device from the captured one or more images.

5. An apparatus as claimed in any preceding claim wherein the means are for capturing one or more images of the user and the head mounted item comprising one or more reflective surfaces and using one or more filters to reduce the light pattern from the image.

6. An apparatus as claimed in any preceding claim wherein the means are for alternating the projected light pattern between an off state and an on state and capturing one or more images of the user and the head mounted item comprising one or more reflective surfaces and controlling image processing of the captured images based on whether an image was captured when the projected light pattern was in an off state or an on state.

7. An apparatus as claimed in claim 6 wherein if the image was captured when the projected light pattern was in an off state the image processing is controlled to remove the reflection and if the image was captured when the projected light pattern was in an on state the image processing is controlled to remove the reflection and the light pattern.

8. An apparatus as claimed in any of claims 1 to 5 wherein the means are for alternating the projected light pattern between an off state and an on state and capturing one or more images of the user and the head mounted item comprising one or more reflective surfaces and synchronising the capturing of the images so that the image is captured when the projected light pattern is in an on state.

9. An apparatus as claimed in any preceding claim wherein one or more parameters of the light pattern are selected to reduce the visibility of the light pattern for the user wearing the head mounted item.

10. An apparatus as claimed in any claim 9 wherein the means are for obtaining information relating to one or more optical properties of the one or more reflective surfaces and using the obtained information to control the one or more parameters of the light pattern.

11. An apparatus as claimed in any of claims 9 to 10 wherein the one or more parameters comprise any one or more of: polarization of the light, wavelength of the light.

12. An apparatus as claimed in any preceding claim wherein the means are for using machine learning to detecting that the user is wearing the head mounted item comprising one or more reflective surfaces.

13. A device or a head mounted item comprising an apparatus as claimed in any preceding claim.

14. A method comprising:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.

15. A computer program comprising computer program instructions that, when executed by processing circuitry, cause:
detecting a user is using a device with a display and that the user is wearing a head mounted item comprising one or more reflective surfaces; and
causing a light pattern to be projected onto the one or more reflective surfaces wherein the pattern is projected to mask a reflection of the display of the device on the one or more reflective surfaces.
